# EUROPÄISCHE PATENTANMELDUNG

(11) **EP 2 842 404 A1**
(43) Veröffentlichungstag der Anmeldung: **04.03.2015**
(21) Anmeldenummer: 14002854.9
(22) Anmeldetag: 16.08.2014
(51) Int. Cl.: A01B 23/02, A01B 35/24, A01B 63/26, A01C 5/06

(54) **Zustreichvorrichtung für landwirtschaftliche Bodenbearbeitungs- und/oder Sämaschinen**

(30) Priorität: 29.08.2013 DE 102013014300
(71) Anmelder: RAUCH Landmaschinenfabrik GmbH, 76547 Sinzheim (DE); Kuhn S.A., 67700 Saverne (FR)
(72) Erfinder: Schickinger, Harald, D-76547 Sinzheim (DE); Schickinger, Manfred, D-76547 Sinzheim (DE); Dreesbeimdieke, Hermann, D-33334 Gütersloh (DE)
(74) Vertreter: Lenz, Steffen

(57) **Zusammenfassung**

Es wird eine Zustreichvorrichtung (5) für landwirtschaftliche Bodenbearbeitungs- und/oder Sämaschinen vorgeschlagen, welche ein Traggestell (7) mit einem hieran festgelegten Träger (10) aufweist, an welchem wenigstens ein Zustreichwerkzeug (6) - ein sogenannter Striegel - angeordnet ist. Dem drehbar an dem Träger gelagerten Zustreichwerkzeug ist ein verstellbarer Anschlag (12) zugeordnet, gegen welchen das Zustreichwerkzeug in einer jeweiligen, durch den verstellbaren Anschlag vorgegebenen Arbeitsposition anstößt, so dass die mit einer jeweiligen Arbeitsposition des Zustreichwerkzeugs korrespondierende Eindringtiefe desselben in den Boden durch die jeweilige Position des Anschlags einstellbar ist. Die Erfindung sieht vor, dass der Träger einen Tragstab (11) aufweist, an welchem das Zustreichwerkzeug drehbar gelagert ist, wobei der verstellbare Anschlag ein sich radial von dem Tragstab fort erstreckendes Anschlagstück (13) aufweist, gegen welches ein Anschlagabschnitt (6c) des Zustreichwerkzeugs anstößt. Die Erfindung betrifft ferner eine mit einer solchen Zustreichvorrichtung ausgestattete landwirtschaftliche Maschine.

## Beschreibung

Die Erfindung betrifft eine Zustreichvorrichtung für landwirtschaftliche Bodenbearbeitungs- und/oder Sämaschinen, mit einem Traggestell mit einem hieran festgelegten Träger, an welchem wenigstens ein Zustreichwerkzeug angeordnet ist, wobei das Zustreichwerkzeug drehbar an dem Träger gelagert und dem Zustreichwerkzeug ein verstellbarer Anschlag zugeordnet ist, gegen welchen das Zustreichwerkzeug in einer jeweiligen, durch den verstellbaren Anschlag vorgegebenen Arbeitsposition anstößt, so dass die mit einer jeweiligen Arbeitsposition des Zustreichwerkzeugs korrespondierende Eindringtiefe desselben in den Boden durch die jeweilige Position des Anschlags einstellbar ist. Die Erfindung bezieht sich ferner auf eine mit einer solchen Zustreichvorrichtung ausgestattete landwirtschaftliche Bodenbearbeitungs- und/oder Sämaschine.

Bei der landwirtschaftlichen Bodenbearbeitung und insbesondere beim Einbringen von Saatgut in den Boden mittels Sämaschinen, wie beispielsweise Kastensämaschinen, pneumatischen Sämaschinen und dergleichen, ist es für das Keimen und Heranwachsen der Saat entscheidend, dass die unter Verwendung von Säscharen, wie z.B. Schlepp- oder Scheibenscharen, erzeugten Säfurchen nach dem Ablegen des Saatgutes in denselben wieder gleichmäßig verschlossen werden. So stellen wichtige Voraussetzungen für eine erfolgreiche Keimung insbesondere eine ausreichende Wasserversorgung, eine optimale Sauerstoffversorgung und eine der Pflanzenart angepasste Keimtemperatur dar. Alle drei der genannten Keimfaktoren werden dabei maßgeblich von der Ablagetiefe der Saat und ihrem Kontakt mit dem sie umgebenden Boden beeinflusst. Eine zunehmende Ablagetiefe erhöht die Keimwasserversorgung, vermindert aber das Sauerstoffangebot im Boden. Ferner erreicht die von der Sonne ausgelöste Bodenerwärmung bei einer größeren Ablagetiefe das Saatgut später. Eine präzise Saatgutverteilung im Boden sichert ferner eine gute Standraumverteilung der Pflanzen für optimales und gleichmäßiges Wachstum. Zu geringe Abstände der Saatgutkörner können zu Wassermangel und Konkurrenzverhalten unter den Pflanzen führen, zu große Abstände reduzieren den Ertrag und begünstigen den Einschuss von Unkraut. Unabhängig vom Aufbau der Säscharen werden diese Voraussetzungen nur durch eine konstante Ablagetiefe und einen gleichmäßigen Ablageabstand des Saatgutes erfüllt, welcher nicht zuletzt durch die in der Regel im Bereich des freien Endes der Säschar angeordnete Zustreichvorrichtung sichergestellt wird, welche das in der Säfurche abgelegte Saatgut gleichmäßig mit Bodenmaterial bedeckt und hierdurch auch eine Verlagerung des Saatgutes, sei es durch Wind oder Niederschlagswasser, verhindert.

Um das in den Säfurchen abgelegte Saatgut optimal mit Bodenmaterial zu bedecken, indem es die zwischen den Säfurchen erzeugten Bodenerhebungen bzw. -wälle glattstreicht, muss das Höhenniveau des Zustreichwerkzeugs bzw. dessen Eindringtiefe in den Boden ferner an die jeweilige Bodenbeschaffenheit angepasst werden, weshalb moderne Zustreichvorrichtungen üblicherweise Einstelleinrichtungen besitzen, welche zur Höhenverlagerung der Zustreichwerkzeuge an ihrem jeweiligen Träger dienen.

Gattungsgemäße Zustreichvorrichtungen, deren Zustreichwerkzeug auch als "Striegel" bezeichnet wird und üblicherweise von einem gebogenen und gegebenenfalls unter elastischer Vorspannung gegen den Boden stehenden Metallstab gebildet ist, sind in vielerlei Ausgestaltung bekannt. So beschreibt beispielsweise die EP 2 168 415 A1 eine Zustreichvorrichtung, deren in der vorgenannten Weise ausgebildeten Zustreichwerkzeuge an einem sich senkrecht zur Fahrtrichtung der Sämaschine erstreckenden Träger festgelegt sind, wobei die Zustreichwerkzeuge im Wesentlichen - in Fahrtrichtung betrachtet - in Flucht mit den Säscharen angeordnet sind, um die von letzteren erzeugte Säfurche zuzustreichen. Nachteilig ist insbesondere, dass die an dem Träger festgelegten Zustreichwerkzeuge, welche sich während des Betriebs - in Fahrtrichtung der Sämaschine betrachtet - nach hinten und unten erstrecken, bei der Rückwärtsfahrt der Sämaschine Gefahr laufen, sich im Boden zu verhaken und dadurch verbogen oder gar zerbrochen zu werden.

Diesem Problem begegnet die Zustreichvorrichtung gemäß der DE 10 2006 038 724 A1 dadurch, dass der Querträger, an welchem die Zustreichwerkzeuge festgelegt sind, um eine sich parallel zu dem Träger erstreckende Schwenkachse klappbar sind, so dass die während des Betriebs sich - in Fahrtrichtung bei der Vorwärtsfahrt betrachtet - nach hinten und unten erstreckenden Zustreichwerkzeuge bei der Rückwärtsfahrt gemeinsam mit dem Träger wiederum in eine sich nach - in Fahrtrichtung bei der Rückwärtsfahrt betrachtet - nach hinten und unten erstreckende Position verschwenkt werden. Nachteilig ist insbesondere die relativ aufwändige, schwenkbare Befestigung des Querträgers mit den Zustreichwerkzeugen an dem Traggestell, welche zudem für die notwendige - nur gemeinsam mögliche - Höhenverstellung der Zustreichwerkzeuge mit teleskopierbar ausgestaltet ist.

Die DE 10 2008 045 635 A1 beschreibt eine mit einem Zustreichwerkzeug in Form eines Scharstriegels versehene Bodenbearbeitungsmaschine, wobei das Zustreichwerkzeug mit zwei parallelen Zustreichabschnitten versehen ist, welche mittels eines Verbindungsbügels miteinander verbunden. Das Zustreichwerkzeug ist dadurch höhenverstellbar an einem Träger in Form eines Scharstriegelhalters befestigt, indem der Träger einerseits mit einer Höhenverstelleinrichtung, andererseits mit einer Winkelverstelleinrichtung ausgestattet ist. Die Winkelverstelleinrichtung gewährleistet eine Einstellung des Neigungswinkels bzw. der Eindringtiefe des Zustreichwerkzeugs in den Boden, indem der Verbindungsbügel des Zustreichwerkzeugs um seine horizontale Erstreckungsachse drehbar an einer mit dem Träger verschraubten Tragplatte gelagert ist, wobei die Tragplatte ferner zwei Anschläge aufweist, gegen welchen die oberen, dem Boden abgewandten Enden der Zustreichabschnitte des Zustreichwerkzeugs anstoßen. Die Anschläge sind dabei von einem an der Tragplatte verschraubten Querbolzen gebildet, welcher offenbar in nicht näher erläuterter Weise in verschiedenen Höhenpositionen an der Tragplatte befestigbar ist. Darüber hinaus ist die freie Schwenkbarkeit des Zustreichwerkzeugs durch eine letzteres von unten gegen die Anschläge der Halteplatte andrückende, elastische Halteplatte begrenzt, welche dazu dient, das Zustreichwerkzeug während der Vorwärtsfahrt stets mit den Anschlägen in Kontakt zu halten, aber aufgrund ihrer Elastizität gleichwohl ein gewisses Verschwenken des Zustreichwerkzeugs nach vorne während der Rückwärtsfahrt gewährleistet. Als nachteilig erweist sich insbesondere die sowohl in konstruktiver als auch vor allem in handhabungstechnischer Hinsicht aufwändige Ausgestaltung der Lagerung des Zustreichwerkzeuge einschließlich der diesem zugeordneten verstellbaren Anschläge, welche auch ein Ausweichen der Zustreichwerkzeugs bei der Rückwärtsfahrt der landwirtschaftlichen Maschine nur eingeschränkt gewährleisten.

Der US 2 424 014 A ist eine Zustreichvorrichtung einer Säschar mit einem Zustreichwerkzeug zu entnehmen, welches an einem Tragarm starr befestigt ist, wobei der Tragarm um eine horizontale Achse schwenkbar an einem Träger gelagert ist. Ein verstellbarer Anschlag des mit dem Zustreichwerkzeug versehenen Tragarms an dem Träger ist dadurch gegeben, dass der Tragarm mittels eines Bolzens, dessen wirksame Länge durch eine Schrauben-/Muttereinheit verstellbar ist, in federbelasteter Weise mit dem Träger verbunden ist. Auch ein solchermaßen gebildeter, durch Längenänderung der Schrauben-/Muttereinheit verstellbarer Anschlag erweist sich indes insbesondere in handhabungstechnischer Hinsicht als mühsam, wobei insbesondere infolge der starren Anordnung des Zustreichwerkzeugs an dem Tragarm auch ein Ausweichen/Verschwenken des Zustreichwerkzeugs bei der Rückwärtsfahrt nicht möglich ist, so dass die Gefahr einer Zerstörung der Zustreichwerkzeugs besteht.

Der Erfindung liegt die Aufgabe zugrunde, eine Zustreichvorrichtung der eingangs genannten Art unter zumindest weitestgehender Vermeidung der vorgenannten Nachteile dahingehend weiterzubilden, dass eine sehr einfache und kostengünstige Höhenverstellung der Zustreichwerkzeuge möglich ist und insbesondere auch eine Beschädigung der Zustreichwerkzeuge bei der Rückwärtsfahrt der landwirtschaftlichen Maschine, wie beispielsweise einer Sämaschine, zuverlässig verhindert wird. Sie ist ferner auf eine mit einer solchen Zustreichvorrichtung ausgestattete landwirtschaftliche Bodenbearbeitungs- und/oder Sämaschine gerichtet.

Erfindungsgemäß wird diese Aufgabe bei einer Zustreichvorrichtung der eingangs genannten Art dadurch gelöst, dass der Träger einen Tragstab aufweist, an welchem das Zustreichwerkzeug drehbar gelagert ist, wobei der verstellbare Anschlag ein sich mit radialer Erstreckungsrichtungskomponente von dem Tragstab fort erstreckendes Anschlagstück aufweist, gegen welches ein Anschlagabschnitt des Zustreichwerkzeugs anstößt.

Zur Lösung dieser Aufgabe sieht die Erfindung ferner eine landwirtschaftliche Bodenbearbeitungs- und/oder Sämaschine vor, welche mit einer Zustreichvorrichtung der vorgenannten Art ausgestattet ist.

Die erfindungsgemäße Ausgestaltung bietet zunächst eine in konstruktiver Hinsicht sehr einfache Schwenkbarkeit der Zustreichwerkzeuge, indem diese drehbar an dem Tragstab des Trägers gelagert sind und somit im Falle einer Rückwärtsfahrt der landwirtschaftlichen Bodenbearbeitungs- und/oder Sämaschine in bzw. entgegen der normalen Fahrtrichtung verschwenkt werden können, um sie vor einer Beschädigung infolge Verhakens in dem Boden zu bewahren. Darüber hinaus bietet die erfindungsgemäße Ausgestaltung insbesondere eine sehr einfache Verstellbarkeit der Zustreichwerkzeuge hinsichtlich ihrer gewünschten Eindringtiefe, indem der Anschlag, gegen welchen das Zustreichwerkzeug in seiner jeweiligen Arbeitsposition während des Betriebs anstößt, verstellt wird, so dass eine jeweilige Anschlagposition des Zustreichwerkzeugs an dem Anschlag mit einer unterschiedlichen Schwenkposition des Zustreichwerkzeugs korrespondiert, welche wiederum zu einer unterschiedlichen Eindringtiefe des Zustreichwerkzeugs in den Boden resultiert. Dabei sieht die Erfindung im Hinblick auf einen die Verschwenkbarkeit des Zustreichwerkzeugs in einer jeweils gewünschten Arbeitsposition begrenzenden, aber gleichwohl ein mehr oder minder uneingeschränktes Ausweichen bzw. Verschwenken bei der Rückwärtsfahrt gewährleistenden Anschlag vor, dass der Anschlag ein sich mit radialer Erstreckungsrichtungskomponente, insbesondere im Wesentlichen radial, von dem Tragstab fort erstreckendes Anschlagstück aufweist, gegen welches der Anschlagabschnitt des Zustreichwerkzeugs anstößt. Dieser Anschlagabschnitt dient folglich als Widerlager des Zustreichwerkzeugs gegen den verstellbaren Anschlag in dessen Arbeitsposition. Der verstellbare Anschlag erweist sich dabei als sehr einfach aufgebaut, leicht und bequem handhabbar sowie höchst robust.

Ferner bietet die Erfindung insbesondere die Möglichkeit, dass die Zustreichwerkzeuge mittels separater, einem jeden Zustreichwerkzeug zugeordneter, verstellbarer Anschläge unabhängig voneinander verstellt werden können (dies kann beispielsweise im Falle einer unterschiedlichen Abnutzung der Zustreichwerkzeuge zweckmäßig sein), wobei die Zustreichwerkzeuge entweder, wie beispielsweise aus der eingangs zitierten DE 10 2006 038 724 A1 als solches bekannt, an einem gemeinsamen Querträger, aber auch unmittelbar an einer jeweiligen Säschar, wie beispielsweise einer Scheibenschar, angeordnet werden können.

Der zur drehbaren Lagerung des Zustreichwerkzeugs bzw. der Zustreichwerkzeuge dienende Tragstab des Trägers kann zweckmäßigerweise im Wesentlichen quer zur Fahrtrichtung der landwirtschaftlichen Maschine angeordnet sein. Wie bereits angedeutet, kann es sich bei dem Tragstab um einen sämtlichen Zustreichwerkzeugen gemeinsamen Tragstab ähnlich dem Querträger der DE 10 2006 038 724 A1 handeln, oder es kann sich insbesondere um eine Mehrzahl an jeweils einem einzigen Zustreichwerkzeug zugeordneten Tragstäben oder Gruppen von Zustreichwerkzeugen gemeinsamen Tragstäben handeln, welche insbesondere direkt an der jeweiligen Säschar festgelegt sein können.

Gemäß einer konstruktiv besonders einfachen und kostengünstigen sowie mechanisch robusten Ausgestaltung kann vorgesehen sein, dass das Zustreichwerkzeug dadurch drehbar an dem Tragstab gelagert ist, dass ein Lagerabschnitt des Zustreichwerkzeugs sich um einen Winkel von mehr als 180° um den Umfang des Tragstabes herum erstreckt. Das Zustreichwerkzeug erstreckt sich folglich bevorzugt abschnittsweise um mehr als etwa 180° um den Umfang des Tragstabes herum, so dass es an letzteren unverlierbar, aber um seine Erstreckungsachse schwenkbar gelagert ist. Das Zustreichwerkzeug kann sich hierbei vorzugsweise abschnittsweise auch um wenigstens etwa 360°, insbesondere um wenigstens etwa 540°, um den Umfang des Tragstabes herum erstrecken, so dass es in seiner Arbeitsposition, wenn es gegen den verstellbaren Anschlag anstößt, nach Art einer Schraubenfeder elastisch gegen den Boden vorbelastet ist, d.h. der Lagerabschnitt dient ferner zur elastischen Vorbelastung des Zustreichwerkzeugs gegen den Boden in seiner Arbeitsposition.

Der Anschlagabschnitt des insbesondere auf die vorgenannte Weise an dem Tragstab drehbar gelagerten Zustreichwerkzeugs kann zweckmäßigerweise eine in Bezug auf den Tragstab parallele Erstreckungsrichtungskomponente aufweisen, wobei der Anschlagabschnitt insbesondere im Wesentlichen parallel zu dem Tragstab angeordnet sein kann.

Um insbesondere für eine in Bezug auf den Tragstab im Wesentlichen axialfeste, aber gleichwohl schwenkbare Anordnung des Zustreichwerkzeugs an dem Tragstab zu sorgen, kann das Zustreichwerkzeug vorteilhafterweise beidseitig seines Anschlagabschnittes mit einem Lagerabschnitt der weiter oben genannten Art versehen sein, welcher sich jeweils um einen Winkel von mehr als 180°, vorzugsweise um einen Winkel von wenigstens 360°, um den Umfang des Tragstabes herum erstreckt. In diesem Fall kann sich vorteilhafterweise an beide Lagerabschnitte des Zustreichwerkzeugs ein insbesondere zum Zustreichen einer Säfurche mit dem Bodenmaterial in Kontakt tretender Zustreichabschnitt anschließen, so dass sich ein symmetrischer Aufbau des Zustreichwerkzeugs in Bezug auf seinen Anschlagabschnitt ergibt. Die Länge des Anschlagabschnittes des Zustreichwerkzeugs kann dabei insbesondere etwa der Breite des Anschlagstückes des Anschlags entsprechen, um eine axialfeste Positionierung an dem Tragstab zu gewährleisten.

Alternativ oder zusätzlich kann zu letztgenanntem Zweck auch vorgesehen sein, dass der Tragstab mit Haltemitteln ausgestattet ist, welche zur drehbaren, aber in Erstreckungsrichtung des Tragstabes axialfesten Lagerung des Zustreichwerkzeugs an dem Tragstab geeignet sind. Bei derartigen Mitteln kann es sich beispielsweise um auf den Tragstab aufgeklemmte oder aufgeschraubte Klammern, in Bohrungen des Tragstabes eingebrachte und von dessen Umfang vorstehende Haltestifte oder dergleichen handeln.

Die Verstellbarkeit des Anschlags kann beispielsweise dadurch gewährleistet sein, dass das Anschlagstück in verschiedenen Umfangspositionen in Bezug auf den Tragstab an diesem lösbar festlegbar bzw. arretierbar ist, so dass die hiermit korrespondierende Arbeitsposition des Zustreichwerkzeugs, wenn dessen Anschlagabschnitt gegen das Anschlagstück anstößt, um den Umfang des Tragstabes herum "wandert".

Gemäß einer vorteilhaften Ausgestaltung kann die Verstellbarkeit des Anschlags dabei beispielsweise dadurch gewährleistet sein, dass das Anschlagstück einen hieran exzentrisch angeordneten Stift aufweist, welcher in verschiedenen Drehpositionen drehfest in einer Bohrung des Tragstabes, welche sich insbesondere im Wesentlichen in Radialrichtung des Tragstabes erstreckt, festlegbar bzw. arretierbar ist. Auf diese Weise ist eine in handhabungstechnischer Hinsicht sehr einfache und bequeme Verstellung des Anschlags entsprechend der gewünschten Eindringtiefe des Zustreichwerkzeugs in den Boden möglich, indem das Anschlagstück so lange um seinen exzentrischen Stift gedreht wird, bis das Anschlagstück die mit der gewünschten Arbeitsposition bzw. mit der gewünschten Eindringtiefe des Zustreichwerkzeugs korrespondierende Anschlagposition erreicht hat, woraufhin das Anschlagstück durch Festlegen seines Stiftes in der Bohrung in dieser Position arretiert wird.

Während der exzentrische Stift des Anschlagstückes grundsätzlich in beliebiger Weise lösbar in der Bohrung (oder in mehreren Bohrungen) des Tragstabes festgelegt sein kann, beispielsweise mittels Schrauben oder dergleichen, kann der Stift vorteilhafterweise zumindest abschnittsweise mit einem Mehrkantprofil versehen sein, welches zu einem Mehrkantprofil der Bohrung des Tragstabes komplementär ist. Folglich ergeben sich durch verschiedene Eingriffsstellungen des Mehrkantprofils des Stiftes in Bezug auf das Mehrkantprofil der Bohrung verschiedene Anschlagpositionen des Anschlagstückes und folglich verschiedene Arbeitspositionen bzw. Eindringtiefen des Zustreichwerkzeugs in den Boden.

Ferner kann es hierbei von Vorteil sein, wenn der Stift des Anschlagstückes unverlierbar in der Bohrung gehalten ist, was beispielsweise dadurch gewährleistet sein kann, dass der Stift die Bohrung des Tragstabes gänzlich durchsetzt und an seiner dem Anschlagstück entgegengesetzten Seite, beispielsweise mittels einer auf ein endständiges Gewinde desselben aufgebrachten Mutter, vor einem Herausfallen aus der Bohrung bewahrt ist.

In vorteilhafter Ausgestaltung kann in diesem Zusammenhang vorgesehen sein, dass der Stift des Anschlagstückes mit einem, insbesondere verstellbaren, axialen Spiel in der Bohrung gehalten ist, wobei das Axialspiel zumindest der axialen Länge seines mit dem Mehrkantprofil der Bohrung im Eingriff stehenden Mehrkantprofils entspricht. Auf diese Weise lässt sich das Mehrkantprofil des Stiftes in bzw. außer Eingriff mit dem Mehrkantprofil der Bohrung des Tragstabes bringen, um das Anschlagstück zu arretieren bzw. zu verstellen, ohne den Stift gänzlich aus der Bohrung herausnehmen zu müssen. Das Axialspiel des Stiftes kann dabei, wie oben angedeutet, insbesondere durch eine endständig auf denselben aufgebrachte, verstellbare Mutter einstellbar sein.

Darüber hinaus kann es in diesem Zusammenhang von Vorteil sein, wenn der Stift unter mechanischer, insbesondere elastischer, Vorbelastung in die Eingriffsposition seines Mehrkantprofils in das Mehrkantprofil der Bohrung des Tragstabes steht, so dass der Stift stets bestrebt ist, in die Eingriffsposition mit dem Mehrkantprofil der Bohrung zu gelangen, wobei im Falle eines Verstellens des Stiftes durch Drehen desselben um seine Achse eine axiale Kraft entgegen dieser Vorbelastung in seine Position aufgebracht werden muss, um sein Mehrkantprofil außer Eingriff mit dem der Bohrung des Tragstabes zu bringen. Eine solche Vorbelastung kann z.B. mittels einer Feder gewährleistet sein, welche sich zwischen der dem Anschlagstück entgegengesetzten Seite des Tragstabes und einer dort endständig auf den Stift aufgebrachten Mutter befindet.

Gemäß einer vorteilhaften Weiterbildung der erfindungsgemäßen Zustreichvorrichtung kann ferner vorgesehen sein, dass
- der Träger höhenverstellbar an dem Traggestell; und/oder
- das Traggestell höhenverstellbar an einem Traggestänge einer Säschar oder an einem Rahmen der Bodenbearbeitungs- und/oder Sämaschine
festlegbar ist. Auf diese Weise kann entweder eine "Grobeinstellung" der gewünschten Eindringtiefe des Zustreichwerkzeugs in den Boden vorgenommen werden, oder es kann insbesondere auch einem zunehmenden Verschleiß des während des Betriebs mit dem Boden in Kontakt stehenden Zustreichabschnittes des Zustreichwerkzeugs Rechnung getragen werden, indem der Träger gegenüber dem Traggestell auf einem tieferen Höhenniveau angeordnet wird. Die Höhenverstellbarkeit kann z.B. in als solcher bekannter Weise mittels in dem Traggestell und/oder dem Träger vorgesehener Langlöcher, mittels einer Mehrzahl an übereinander angeordneten Befestigungsbohrungen oder dergleichen sichergestellt sein, an welchen der Träger und das Traggestell bzw. das Traggestell und das Traggestänge der Säschar oder der Rahmen der Bodenbearbeitungs- und/oder Sämaschine wahlweise lösbar aneinander befestigt werden kann.

Gemäß einer weiteren vorteilhaften Weiterbildung kann vorgesehen sein, dass dem Zustreichwerkzeug ein Halteelement zugeordnet ist, welches zum lösbaren, insbesondere klemmenden und/oder rastenden, Festlegen des Zustreichwerkzeugs in einer Ruheposition desselben dient. Auf diese Weise ist es insbesondere möglich, das während des Betriebs üblicherweise spitz nach hinten vorstehende Ende des Zustreichabschnittes des Zustreichwerkzeugs während des Transportes oder während der Lagerung in eine verkehrssichere Lage zu bringen, in welcher die Zustreichwerkzeuge kein Verletzungsrisiko darstellen. Zu diesem Zweck erstreckt sich das freie Ende des Zustreichwerkzeugs in seiner Ruheposition zweckmäßig im Wesentlichen in Fahrtrichtung der landwirtschaftlichen Bodenbearbeitungs- und/oder Sämaschine.

Das Zustreichwerkzeug kann ferner, wie als solches aus dem Stand der Technik bekannt, nur einen oder vorzugsweise auch zwei, insbesondere im Wesentlichen parallel angeordnete, Zustreichabschnitte aufweisen.

Wie bereits erwähnt, betrifft die Erfindung schließlich auch eine landwirtschaftliche Bodenbearbeitungs- und/oder Sämaschine, welche mit wenigstens einer Zustreichvorrichtung der vorgenannten Art versehen ist. Sofern es sich hierbei insbesondere um eine Sämaschine, wie eine pneumatische Sämaschine, eine Kastensämaschine oder dergleichen, handelt, ist es denkbar, dass
- jeder Säschar eine Zustreichvorrichtung mit je einem solchen Zustreichwerkzeug; oder
- jeweils Paaren benachbarter Säscharen eine gemeinsame Zustreichvorrichtung der vorgenannten Art mit je einem zwei

Zustreichabschnitte aufweisenden Zustreichwerkzeug zugeordnet ist.

Weitere Merkmale und Vorteile der Erfindung ergeben sich aus der nachfolgenden Beschreibung eines Ausführungsbeispiels unter Bezugnahme auf die Zeichnungen. Dabei zeigen:
- Fig. 1: eine schematische Seitenansicht einer Säschar mit einer Ausführungsform einer erfindungsgemäßen Zustreichvorrichtung;
- Fig. 2: eine schematische perspektivische Ansicht der Säschar gemäß Fig. 1 mit derselben Zustreichvorrichtung;
- Fig. 3: eine schematische perspektivische Detailansicht der Zustreichvorrichtung der Säschar gemäß Fig. 1 und 2;
- Fig. 4: eine schematische perspektivische Detailansicht der Zustreichvorrichtung gemäß Fig. 3 in Bereich des Anschlags des Zustreichwerkzeugs;
- Fig. 5: eine schematische perspektivische Explosionsansicht des Anschlags einschließlich des ihn tragenden Tragstabes; und
- Fig. 6: eine schematische perspektivische Detailansicht des Anschlags gemäß Fig. 5 von schräg unten betrachtet.

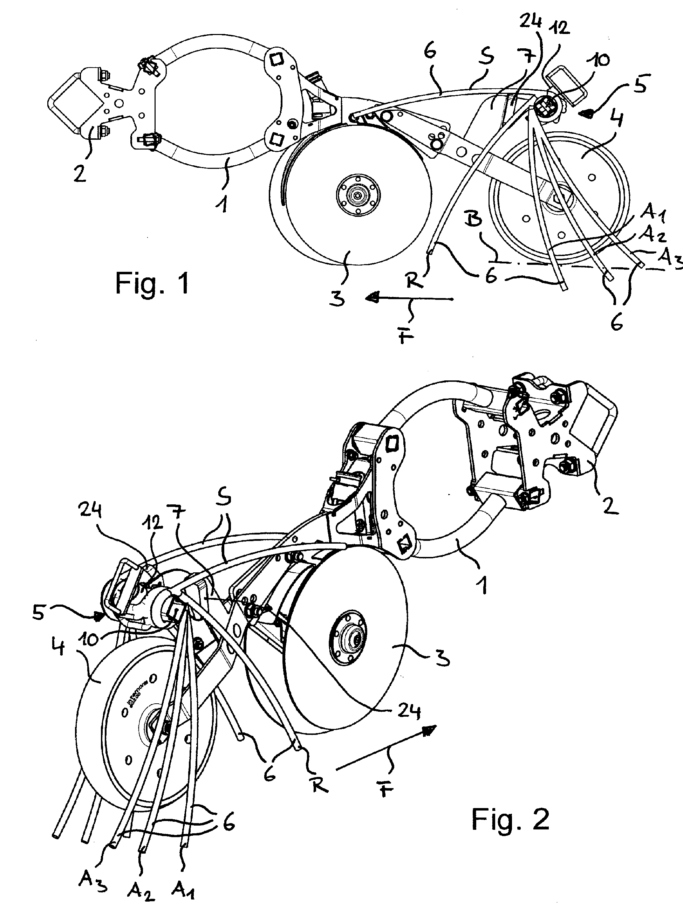

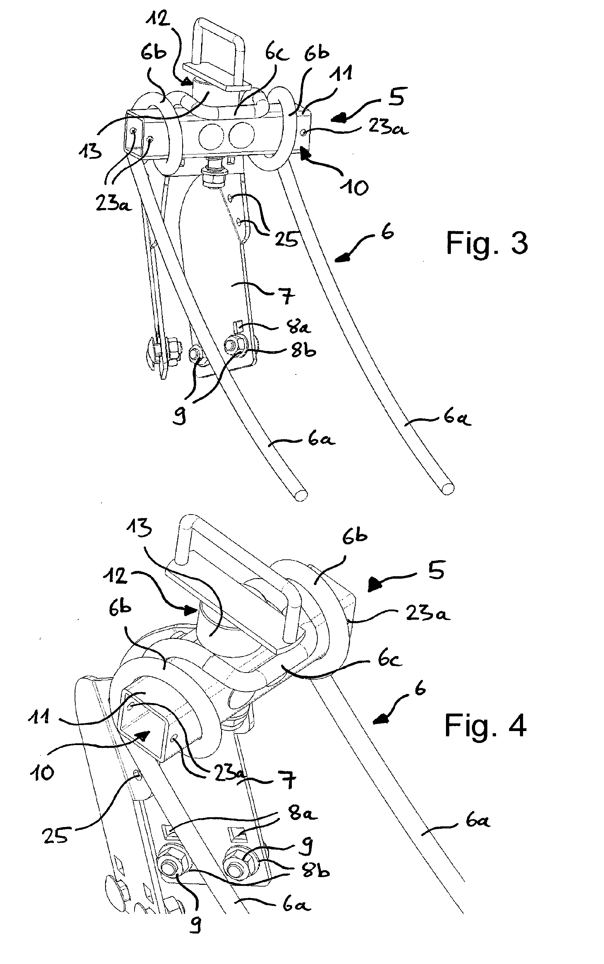

In Fig. 1 und 2 ist eine beim vorliegenden Ausführungsbeispiel in Form einer Scheibenschar ausgebildeten Säschar wiedergegeben. Die Säschar weist in als solches bekannter Weise ein Traggestänge 1 auf, welches mittels einer geeigneten Befestigungseinrichtung 2 lösbar an dem Rahmen einer nicht gezeigten Sämaschine festlegbar ist. Die Säschar umfasst beim vorliegenden Ausführungsbeispiel ferner eine an dem Traggestänge 1 festgelegte Scharscheibe 3 sowie eine dieser nachgeordnete, am freien Ende des Traggestänges 1 gelagerte Andruckrolle 4, welche sich - in Fahrtrichtung F der Sämaschine betrachtet - in Flucht mit der Scharscheibe 3 befindet. Die Aufgabe der Andruckrolle 4 besteht vornehmlich darin, das in die von der Scharscheibe 3 erzeugte Säfurche abgelegte Saatgut anzudrücken. Die Säschar ist darüber hinaus mit einer weiter unten unter Bezugnahme auf die Fig. 3 bis 6 näher erläuterten Zustreichvorrichtung 5 ausgestattet, welche ein Zustreichwerkzeug 6 - den sogenannten Striegel - umfasst, dessen Aufgabe darin besteht, die von der Scharscheibe 3 erzeugte Säfurche wieder mit Bodenmaterial zu befüllen, welches beidseitig der Säfurche angehäuft worden ist, so dass das Saatgut gleichmäßig mit Bodenmaterial bedeckt wird. Wie weiter unten noch näher erläutert, ist das Zustreichwerkzeug 6 je nach Bodenbeschaffenheit in verschiedene Arbeitspositionen A₁, A₂, A₃ verstellbar, welche mit unterschiedlichen Eindringtiefen in den in Fig. 1 strichpunktiert angedeuteten Boden korrespondieren. Um im Falle einer Rückwärtsfahrt der Sämaschine, also entgegen der Fahrtrichtung F, eine Beschädigung des Zustreichwerkzeugs 6 zu vermeiden, ist letzteres ferner aus seiner jeweiligen Arbeitsposition A₁, A₂, A₃ in Fahrtrichtung F verschwenkbar (Position R des Zustreichwerkzeugs 6 in Fig. 1 und 2). Überdies ist das Zustreichwerkzeug 6 in einer Ruhe- oder Stillstandsposition S, in welcher es sich im Wesentlichen in die normale Fahrtrichtung F erstreckt, festlegbar, um es während des Transports oder anlässlich der Lagerung, in welcher die Säscharen in der Regel aus ihrer in Fig. 1 und 2 gezeigten Betriebsposition um die Befestigungseinrichtung 2 nach oben verschwenkt werden, verkehrs- und verletzungssicher aufbewahren zu können.

Fig. 3 und 4 zeigen Detailansichten der Zustreichvorrichtung 5 des Säschar gemäß Fig. 1 und 2. Wie hieraus ersichtlich, umfasst die Zustreichvorrichtung 5 ein - im vorliegenden Fall im Wesentlichen von einer Tragplatte gebildetes - Traggestell 7, über welches die Zustreichvorrichtung 5 an dem Traggestänge 1 der Säschar (siehe Fig. 1 und 2) festgelegt ist. Beim vorliegenden Ausführungsbeispiel weist das Traggestell 7 im Bereich seiner Unterseite eine Mehrzahl an Befestigungsbohrungen 8a, 8b auf, welche auf verschiedenen Höhenniveaus angeordnet sind, um die Zustreichvorrichtung 5 mittels Schrauben 9 in unterschiedlichen Höhenniveaus an dem Traggestänge 1 der Säschar festlegen zu können und dabei beispielsweise einem zunehmenden Verschleiß des Zustreichwerkzeugs 6 Rechnung zu tragen. Alternativ können zu diesem Zweck selbstverständlich auch noch mehr solcher Befestigungsbohrungen oder Langlöcher mit vertikaler Erstreckungsrichtungskomponente (nicht gezeigt) vorgesehen sein. An der Oberseite des Traggestells 7 ist ein Träger 10 im Wesentlichen in Form eines Tragstabes 11 befestigt, welcher sich insbesondere etwa senkrecht zur Fahrtrichtung F (Fig. 1 und 2) erstreckt und an welchem das Zustreichwerkzeug 6 um die Erstreckungsachse des Trägers 10 drehbar gelagert ist.

Das Zustreichwerkzeug 6 ist im vorliegenden Fall einstückig aus einem gebogenen Metallstab gebildet und weist zwei endständige, parallel zueinander angeordnete Zustreichabschnitte 6a auf, welche während des Betriebs mit dem Boden in Kontakt stehen und die Säfurche mit dem dieser benachbarten Bodenmaterial zustreichen. Die Zustreichabschnitte 6a können im Wesentlichen geradlinig, gebogen und/oder mit Knickstellen versehen sein oder auch eine beliebige bekannte Gestalt besitzen, welche zur Erfüllung der ihnen zugedachten Funktion geeignet ist. An das den freien Enden der Zustreichabschnitte 6a entgegengesetzte Ende derselben schließt sich jeweils ein Lagerabschnitt 6b an, welcher sich jeweils etwa spiralförmig um einen Winkel von mehr als 180° - im vorliegenden Fall um einen Winkel von etwa 540° - um den Umfang des Tragstabes 11 herum erstreckt, um das Zustreichwerkzeug um die Erstreckungsachse des Tragstabes 11 drehbar an diesem zu lagern. An ihren einander zugewandten, dem jeweiligen Zustreichabschnitt 6a entgegengesetzten Enden sind die beiden Lagerabschnitte 6b des Zustreichwerkzeugs 6 mittels eines Anschlagabschnittes 6c miteinander verbunden, welcher sich koaxial zur Erstreckungsachse des Tragstabes 11, d.h. parallel zu diesem, erstreckt. Das Zustreichwerkzeug 6 ist im vorliegenden Fall folglich in Bezug auf seinen Anschlagabschnitt 6c symmetrisch ausgestaltet.

Wie weiterhin insbesondere den Fig. 3 und 4 zu entnehmen ist, ist dem Zustreichwerkzeug 6 ein verstellbarer Anschlag 12 zugeordnet, gegen welchen das Zustreichwerkzeug 6 - oder genauer: dessen Anschlagabschnitt 6c - in einer jeweiligen, durch den verstellbaren Anschlag 12 vorgegebenen Arbeitsposition (siehe die in Fig. 1 und 2 exemplarisch dargestellten Arbeitspositionen A₁, A₂, A₃) anstößt, wenn die mit der Zustreichvorrichtung 5 versehene Säschar in Fahrtrichtung F bewegt wird (siehe ebenfalls Fig. 1 und 2) und die Zustreichabschnitte 6a des Zustreichwerkzeugs 6 folglich am Boden entlang schleifen. Wie aus Fig. 1 und 2 ersichtlich, entspricht somit eine jeweilige Anschlagposition des Anschlagabschnittes 6c des Zustreichwerkzeugs 6 an dem Anschlag 12 einer jeweiligen Arbeitsposition A₁, A₂, A₃ des Zustreichwerkzeugs 6, welche wiederum mit einer unterschiedlichen Eindringtiefe desselben in den Boden korrespondiert.

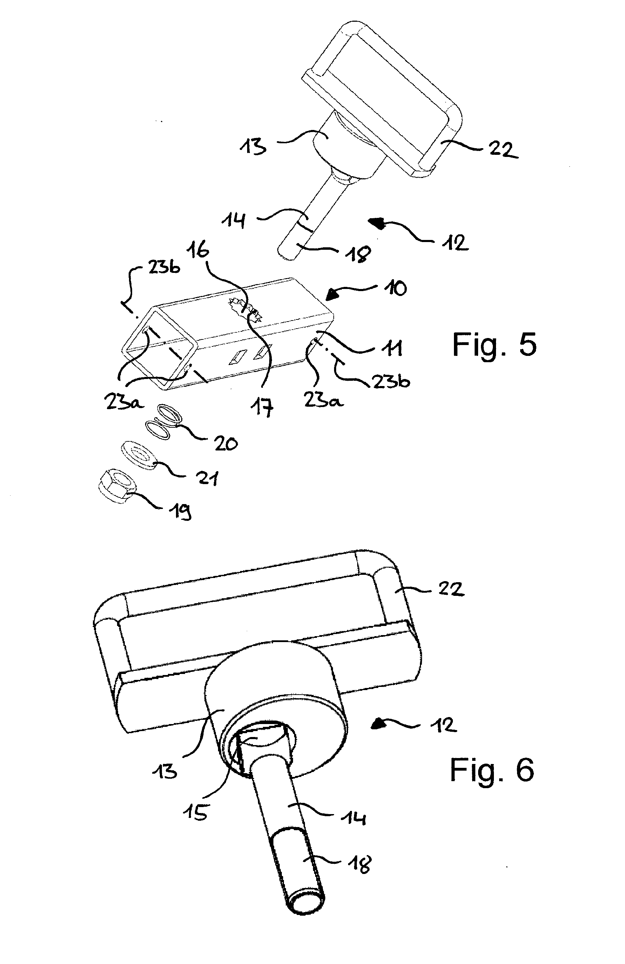

Wie aus Fig. 3 und 4 sowie insbesondere aus Fig. 5 und 6 ersichtlich, weist der Anschlag 12 ein sich radial von dem Tragstab 11 fort erstreckendes Anschlagstück 13 auf, welches im vorliegenden Fall eine zylindrische, insbesondere im Wesentlichen kreiszylindrische, Gestalt besitzt und gegen welches der Anschlagabschnitt 6c des Zustreichwerkzeugs 6 in seiner jeweiligen Arbeitsposition A₁, A₂, A₃ (siehe Fig. 1 und 2) anstößt. Die Länge des Anschlagabschnittes 6c des Zustreichwerkzeugs 6 ist dabei derart bemessen, dass sie etwa der Breite bzw. dem Durchmesser des Anschlagstückes 13 entspricht bzw. letztere(n) geringfügig übertrifft, so dass die beidseits an den Anschlagabschnitt 6c anschließenden Lagerabschnitte 6b des Zustreichwerkzeugs 6 an das Anschlagstück 13 anstoßen oder nur geringfügig von diesem beabstandet werden können, um das Zustreichwerkzeug 6 vor einer axialen Verlagerung entlang des Tragstabes 11 zu bewahren und es stets in der korrekten Position etwa fluchtend mit der Scharscheibe 1 und der Andruckrolle 3 (siehe Fig. 1 und 2) zu halten. Alternativ oder zusätzlich kann das Zustreichwerkzeug 6 vor einer axialen Verlagerung entlang dem Tragstab 11 auch durch den Einsatz von Haltemitteln bewahrt werden, welche im vorliegenden Fall den Tragstab 11 etwa radial durchsetzende Bohrungen 23a umfassen, welche mit Haltestiften 23b (vgl. Fig. 5) versehen sind, wobei der Axialabstand der mit den Haltestiften 23b bestückten Bohrungen 23a etwa dem äußeren Abstand der beiden Lagerabschnitte 6b des Zustreichwerkzeugs 6 entspricht.

Die Verstellbarkeit des Anschlags 12 und somit des Zustreichwerkzeugs 6 in den verschiedenen Arbeitspositionen A₁, A₂, A₃ während des Betriebs ist beim vorliegenden Ausführungsbeispiel dadurch gewährleistet, dass das Anschlagstück 13 an einer seiner Stirnseiten einen hieran exzentrisch angeordneten Stift 14 besitzt, welcher z.B. an seinem dem Anschlagstück 13 zugewandten Ende mit einem Mehrkantprofil 15 versehen ist (Fig. 6), welches im vorliegenden Fall von einem Vierkantprofil gebildet ist. Der Stift 14 ist drehfest in einer sich im Wesentlichen in Radialrichtung des Tragstabes 11 erstreckenden Bohrung 16 desselben festlegbar, indem er in der gewünschten Anschlagposition des Anschlagstückes 13 in die Bohrung 16 eingeführt und dabei sein Mehrkantprofil 15 mit einem hierzu komplementären Mehrkantprofil 17 der Bohrung 16 in Eingriff gebracht wird. Das Mehrkantprofil 17 der Bohrung 17 ist im vorliegenden Fall von einem Sternprofil gebildet, in welchen das Vierkantprofil 15 des Stiftes 14 verrastbar ist. Dem Fachmann ist indes offensichtlich, dass die Mehrkantprofile 15, 17 auch auf beliebige Weise andersartig ausgebildet sein können, so lange ein Eingriff ineinander mit verschiedenen Drehpositionen des Stiftes 14 in Bezug auf die Bohrung 16 des Tragstabes 11 möglich ist, wobei die Mehrkantprofile 15, 17 beispielsweise auch gleichartig, wie z.B. jeweils von Sechskant-, Siebenkant-, Achtkantprofilen usw. gebildet sein können. In jedem Fall sorgt die exzentrische Anordnung des Stiftes 14 in Bezug auf das Anschlagstück 13 bei Drehung des Anschlagstückes 13 um die Achse seines Stiftes 14 für eine unterschiedliche Position des Anschlagstückes 13 an dem Tragstab 11, um über die entsprechende Anschlagposition des Zustreichwerkzeugs 6 die verschiedenen Arbeitspositionen A₁, A₂, A₃ einstellen zu können.

Wie des Weiteren den Fig. 5 und 6 zu entnehmen ist, ist der Stift 14 des Anschlagstückes 13 und somit der gesamte Anschlag 12 unverlierbar in der Bohrung 16 des Tragstabes 11 gehalten, indem er die Bohrung 16 gänzlich durchsetzt und an seinem dem Anschlagstück 13 entgegengesetzten, freien Ende mit einem Gewinde 18 versehen ist, welches mit einer Mutter 19 versehen ist. Die Mutter 19 sollte dabei vorzugsweise auf einen solchen Axialabschnitt des Stiftes 14 aufgebracht werden, dass der Stift 14 unter axialem Spiel in der Bohrung 16 gehalten ist, wobei dieses Axialspiel zumindest der axialen Länge seines Mehrkantprofils 15 entsprechen sollte, so dass es - ohne die Mutter 19 verstellen und/oder lösen zu müssen - möglich ist, das Mehrkantprofil 15 des Stiftes 14 in Eingriff mit dem Mehrkantprofil 17 der Bohrung 16 zu bringen, um ihn hieran drehfest festzulegen, aber auch die Mehrkantprofile 15, 17 außer Eingriff miteinander zu bringen, wenn der Anschlag 12 verstellt werden soll. Darüber hinaus ist es in diesem Fall zweckmäßig, wenn der Stift 14 mechanisch in die Eingriffsposition seines Mehrkantprofils 15 in das Mehrkantprofil 17 der Bohrung 16 vorbelastet ist, um ein Herausrutschen und ein dadurch bedingtes Verstellen der Anschlagposition während des Betriebs zu vermeiden. Dies ist beim vorliegenden Ausführungsbeispiel durch eine auf dem Stift 14 sitzende Schraubenfeder 20 gewährleistet, welche sich einerseits an einer als Widerlager dienenden Unterlegscheibe 21 der Mutter 19, andererseits der dem Anschlagstück 13 entgegengesetzten Seite des Tragstabes 11 abstützt, um das Mehrkantprofil 15 des Stiftes 14 elastisch in Richtung des Tragstabes 11 unter Eingriff in das Mehrkantprofil 17 dessen Bohrung 16 zu drücken.

Um für eine einfache und bequeme Verstellung des Anschlags 12 zu sorgen, umfasst dieser ferner eine Handhabe 22, welche beispielsweise an der dem exzentrischen Stift 14 entgegengesetzten Stirnseite des Anschlagstückes 13 angeordnet ist. Zum Verstellen des Anschlages 12 muss folglich lediglich die Handhabe 22 ergriffen und entgegen der Federspannung nach oben (radial von dem Tragstab 11 fort) bewegt werden, um die Mehrkantprofile 15, 17 außer Eingriff miteinander zu bringen, woraufhin die Handhabe 22 um einen der gewünschten Anschlagposition entsprechenden Winkel um die Achse des Stiftes 14 gedreht und in der gewünschten Anschlagposition losgelassen wird, so dass die Feder 20 die Mehrkantprofile 15, 17 in der "neuen" Anschlagposition wieder miteinander in Eingriff bringt.

Wie schließlich wiederum aus den Fig. 1 und 2 hervorgeht, ist dem Zustreichwerkzeug 6 ferner ein Halteelement 24 zugeordnet, welches zum lösbaren Festlegen des Zustreichwerkzeugs 6 in einer Ruhe- oder Stillstandsposition S dient, in welcher sich sein freies Ende etwa in die normale Fahrtrichtung F erstreckt und nicht nach hinten vorsteht, um ein Verletzungsrisiko während des Transports und/oder der Lagerung zu minimieren. Das Halteelement 24 kann z.B. entweder an dem Traggestänge 1 der Säschar angeordnet oder - wie es beim vorliegenden Ausführungsbeispiel der Fall ist - an der Zustreichvorrichtung 5 selbst angeordnet sein, wobei es beispielsweise je ein zu beiden Seiten des Traggestells 7 vorstehendes Klemmelement umfassen kann, an welchem ein jeweiliger Zustreichabschnitt 6a des Zustreichwerkzeugs 6 in der Ruhe- oder Stillstandsposition S geklemmt werden kann. In den Fig. 3 und 4 ist das Halteelement 24 aus Gründen einer besseren Übersichtlichkeit weggelassen worden, wobei jedoch Befestigungsbohrungen 25 des Traggestells 7 erkennbar sind, an welchen je ein Klemmelement des Halteelementes 24 befestigt werden kann.

## Patentansprüche

1. Zustreichvorrichtung (5) für landwirtschaftliche Bodenbearbeitungs- und/oder Sämaschinen, mit einem Traggestell (7) mit einem hieran festgelegten Träger (10), an welchem wenigstens ein Zustreichwerkzeug (6) angeordnet ist, wobei das Zustreichwerkzeug (6) drehbar an dem Träger (10) gelagert und dem Zustreichwerkzeug (6) ein verstellbarer Anschlag (12) zugeordnet ist, gegen welchen das Zustreichwerkzeug (6) in einer jeweiligen, durch den verstellbaren Anschlag (12) vorgegebenen Arbeitsposition (A₁, A₂, A₃) anstößt, so dass die mit einer jeweiligen Arbeitsposition (A₁, A₂, A₃) des Zustreichwerkzeugs (6) korrespondierende Eindringtiefe desselben in den Boden (B) durch die jeweilige Position des Anschlags (12) einstellbar ist, **dadurch gekennzeichnet, dass** der Träger (10) einen Tragstab (11) aufweist, an welchem das Zustreichwerkzeug (6) drehbar gelagert ist, wobei der verstellbare Anschlag (12) ein sich mit radialer Erstreckungsrichtungskomponente von dem Tragstab (11) fort erstreckendes Anschlagstück (13) aufweist, gegen welches ein Anschlagabschnitt (6c) des Zustreichwerkzeugs (6) anstößt.

2. Zustreichvorrichtung nach Anspruch 1, **dadurch gekennzeichnet, dass** sich der Tragstab (11) im Wesentlichen quer zur Fahrtrichtung (F) erstreckt.

3. Zustreichvorrichtung nach Anspruch 1 oder 2, **dadurch gekennzeichnet, dass** das Zustreichwerkzeug (6) dadurch drehbar an dem Tragstab (11) gelagert ist, dass sich wenigstens ein Lagerabschnitt (6b) des Zustreichwerkzeugs (6) um einen Winkel von mehr als 180°, insbesondere um einen Winkel von wenigstens 360°, um den Umfang des Tragstabes (11) herum erstreckt.

4. Zustreichwerkzeug nach einem der Ansprüche 1 bis 3, **dadurch gekennzeichnet, dass** der Anschlagabschnitt (6c) des Zustreichwerkzeugs (6) eine in Bezug auf den Tragstab (11) parallele Erstreckungsrichtungskomponente aufweist, wobei der Anschlagabschnitt (6c) insbesondere im Wesentlichen parallel zu dem Tragstab (11) angeordnet ist.

5. Zustreichvorrichtung nach einem der Ansprüche 1 bis 4, **dadurch gekennzeichnet, dass** das Zustreichwerkzeug (6) beidseitig seines Anschlagabschnittes (6c) mit einem Lagerabschnitt (6b) versehen ist, welcher sich jeweils um einen Winkel von mehr als 180° um den Umfang des Tragstabes (11) herum erstreckt, wobei insbesondere die Länge des Anschlagabschnittes (6c) des Zustreichwerkzeugs (6) etwa der Breite des Anschlagstückes (13) des Anschlags (12) entspricht.

6. Zustreichvorrichtung nach einem der Ansprüche 1 bis 5, **dadurch gekennzeichnet, dass** der Tragstab (11) mit Haltemitteln (23a, 23b) ausgestattet ist, welche zur drehbaren, aber in Erstreckungsrichtung des Tragstabes (11) axialfesten Lagerung des Zustreichwerkzeugs (6) an dem Tragstab (11) geeignet sind.

7. Zustreichvorrichtung nach einem der Ansprüche 1 bis 6, **dadurch gekennzeichnet, dass** die Verstellbarkeit des Anschlags (12) dadurch gewährleistet ist, dass das Anschlagstück (13) in verschiedenen Umfangspositionen in Bezug auf den Tragstab (11) an diesem lösbar festlegbar ist.

8. Zustreichvorrichtung nach einem der Ansprüche 1 bis 7, **dadurch gekennzeichnet, dass** die Verstellbarkeit des Anschlags (12) dadurch gewährleistet ist, dass das Anschlagstück (13) einen hieran exzentrisch angeordneten Stift (14) aufweist, welcher in verschiedenen Drehpositionen drehfest in einer Bohrung (16) des Tragstabes (11) lösbar festlegbar ist.

9. Zustreichvorrichtung nach Anspruch 8, **dadurch gekennzeichnet, dass** der Stift (14) des Anschlagstückes (13)
- zumindest abschnittsweise mit einem Mehrkantprofil (15) versehen ist, welches zu einem Mehrkantprofil (17) der Bohrung (16) des Tragstabes (11) komplementär ist, und/oder
- unverlierbar in der Bohrung (16) gehalten ist.

10. Zustreichvorrichtung nach Anspruch 8 oder 9, **dadurch gekennzeichnet, dass** der Stift (14) des Anschlagstückes (13) mit einem, insbesondere verstellbaren, axialen Spiel in der Bohrung (16) gehalten ist, wobei das Axialspiel zumindest der axialen Länge seines mit dem Mehrkantprofil (17) der Bohrung (16) im Eingriff stehenden Mehrkantprofils (15) entspricht.

11. Zustreichvorrichtung nach Anspruch 10, **dadurch gekennzeichnet, dass** der Stift (14) unter mechanischer, insbesondere elastischer, Vorbelastung in die Eingriffsposition seines Mehrkantprofils (15) in das Mehrkantprofil (17) der Bohrung (16) des Tragstabes (11) steht.

12. Zustreichvorrichtung nach einem der Ansprüche 1 bis 11, **dadurch gekennzeichnet, dass**
- der Träger (10) höhenverstellbar an dem Traggestell (7); und/oder
- das Traggestell (7) höhenverstellbar an einem Traggestänge (1) einer Säschar oder an einem Rahmen der Bodenbearbeitungs- und/oder Sämaschine festgelegt ist.

13. Zustreichvorrichtung nach einem der Ansprüche 1 bis 12, **dadurch gekennzeichnet, dass** dem Zustreichwerkzeug (6) ein Halteelement (24) zugeordnet ist, welches zum lösbaren, insbesondere klemmenden und/oder rastenden, Festlegen des Zustreichwerkzeugs (6) in einer Ruheposition (S) desselben dient, wobei sich das freie Ende des Zustreichwerkzeugs (6) in seiner Ruheposition insbesondere im Wesentlichen in Fahrtrichtung (F) erstreckt.

14. Zustreichvorrichtung nach einem der Ansprüche 1 bis 13, **dadurch gekennzeichnet, dass** das Zustreichwerkzeug (6) zwei, insbesondere im Wesentlichen parallel angeordnete, Zustreichabschnitte (6a) aufweist.

15. Landwirtschaftliche Bodenbearbeitungs- und/oder Sämaschine, **gekennzeichnet durch** wenigstens eine Zustreichvorrichtung (5) nach einem der vorangehenden Ansprüche, wobei insbesondere
- jeder Säschar eine Zustreichvorrichtung (5) mit je einem Zustreichwerkzeug (6); oder
- jeweils Paaren benachbarter Säscharen eine gemeinsame Zustreichvorrichtung (5) mit je einem, zwei Zustreichabschnitte (6a) aufweisenden Zustreichwerkzeug (6)
zugeordnet ist.
